Europäisches Patentamt

European Patent Office

Office européen des brevets

(11) Numéro de publication: **0 411 528 A1**

# (12) DEMANDE DE BREVET EUROPEEN

(21) Numéro de dépôt: 90114570.6

(22) Date de dépôt: 30.07.90

(51) Int. Cl.⁵: **H04M 3/58, H04M 1/00**

(30) Priorité: 31.07.89 FR 8910291

(43) Date de publication de la demande:
06.02.91 Bulletin 91/06

(84) Etats contractants désignés:
AT BE CH DE DK ES FR GB IT LI NL SE

(71) Demandeur: **ALCATEL BUSINESS SYSTEMS**
**12, rue de la Baume**
**F-75008 Paris(FR)**

(72) Inventeur: **Ferveur, Christian**
**10, rue du Moulin**
**F-67400 Illkirch(FR)**

(74) Mandataire: **Weinmiller, Jürgen et al**
**Lennéstrasse 9 Postfach 24**
**D-8133 Feldafing(DE)**

(54) Dispositif de sécurité pour installation téléphonique à musique de patience.

(57) La carte de musique de patience est remplacée par une autre carte (16A) comportant un microprocesseur (17), un comparateur (20), un temporisateur (25) et une bascule bistable (28). En cas d'absence de musique de patience en sortie (15) du microprocesseur (17), ce niveau audio insuffisant est détecté par le comparateur (20) et le temporisateur (25), ce qui fait basculer le bistable (28) et entraîne par l'entrée (30) du microprocesseur le remplacement de la musique de patience défaillante par une tonalité d'attente.

## DISPOSITIF DE SECURITE POUR INSTALLATION TELEPHONIQUE A MUSIQUE DE PATIENCE

La présente invention se rapporte à un dispositif électronique de sécurité pour une installation téléphonique comportant une possibilité de mise en attente téléphonique du correspondant avec émission d'une "musique de patience".

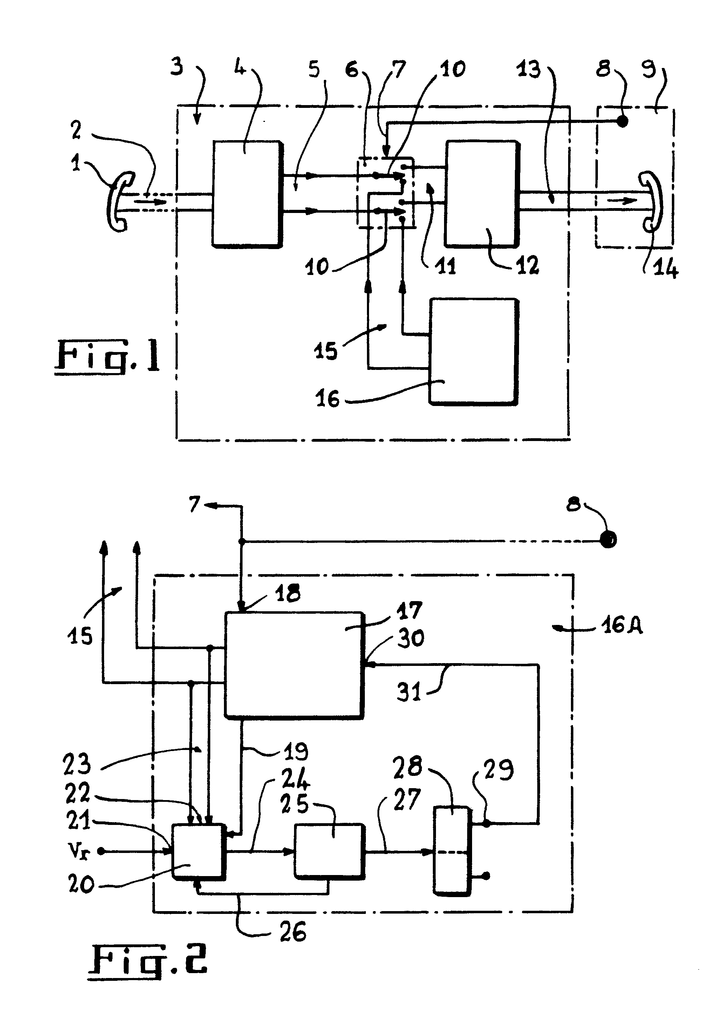

La figure 1 jointe donne le schéma synoptique de principe d'un standard téléphonique avec possibilité de mise en attente téléphonique d'un correspondant, en lui faisant écouter, pendant cette attente téléphonique, un enregistrement dit "musique de patience", qui peut être constitué soit par un morceau de musique, soit par une information vocale répétitive tendant à faire patienter ce correspondant (par exemple : "vous êtes en communication avec..., veuillez patienter, nous recherchons votre correspondant...").

Sur cette figure 1, le combiné téléphonique du correspondant est désigné par la référence 1, et la ligne téléphonique du réseau commuté, aboutissant au standard téléphonique 3 de l'abonné, par la référence 2.

Dans l'installation téléphonique 3 de l'abonné, la ligne 2 aboutit sur une interface 4 dont le signal de sortie est appliqué par une ligne bifilaire 5 à un commutateur bifilaire deux-voies 6 qui est commandé en 7 par un commutateur manuel 8 placé par exemple sur le poste téléphonique 9 présentement utilisé par l'abonné.

Dans une première position de ce commutateur 6 (interrupteurs 10 positionnés vers le haut), la ligne bifilaire 5 est reliée à la ligne bifilaire 11 qui alimente une interface de sortie 12, elle-même reliée par la ligne 13 au combiné 14 du poste téléphonique 9 de l'abonné, de sorte que la communication entre le correspondant en 1 et l'abonné en 14 est normalement établie. Lorsque l'abonné, par action sur le commutateur manuel 8, fait basculer le commutateur 6 (interrupteurs 10 alors positionnés vers le bas), la ligne bifilaire 11 n'est plus reliée à la ligne 5, mais elle est reliée à la ligne bifilaire 15 de sortie d'une carte 16 de génération de la "musique de patience". Le correspondant en 11 entend donc l'enregistrement reproduit par la carte 11 jusqu'à ce que l'abonné se remette en communication avec lui en agissant à nouveau sur le commutateur manuel 8 et donc sur le commutateur 6.

L'inconvénient d'un tel dispositif est l'impossibilité de s'assurer que le correspondant mis en attente reçoit effectivement la musique de patience. En cas de panne de la carte 16, l'abonné en 14 ignore cette panne, et le correspondant en 1, qui ne reçoit alors aucun son pendant la mise en attente téléphonique, n'a pas a priori de raison de la lui signaler, puisqu'il n'est pas censé savoir à l'avance qu'il doit recevoir une musique de patience pendant cette attente téléphonique.

L'invention vise à remédier à cet inconvénient, en particulier par des moyens permettant de ne pas effectuer de changement substantiel de la connectique existante sur une installation téléphonique, mais en remplaçant en pratique la carte de musique de patiente 16 d'une installation existante 3 par une autre carte électronique 16A plus sophistiquée. Elle se rapporte à cet effet à un dispositif électronique de sécurité pour une installation téléphonique comportant une possibilité de mise en attente téléphonique du correspondant avec émission d'un signal ou "musique de patience", ce dispositif comportant des moyens pour mesurer, lorsque la musique de patience doit être émise, l'amplitude quasi-instantanée de la tension qui correspond au signal audio de cette musique de patience, des moyens pour comparer cette amplitude quasi-instantanée à une valeur de référence, et des moyens pour faire basculer lorsque cette amplitude reste inférieure à cette valeur de référence pendant un intervalle de temps prédéterminé, un commutateur apte à commander le remplacement de la musique de patience défaillante par un autre signal d'attente, telle qu'une tonalité. Préférentiellement, ces derniers moyens sont prévus pour commander ce remplacement dès la prochaine communication téléphonique, et non pas pendant la communication en cours.

L'invention sera bien comprise, et ses avantages et autres caractéristiques ressortiront, lors de la description suivante d'un exemple non limitatif de réalisation de ce dispositif, en référence à la figure 2 annexée qui est un schéma synoptique simplifié de la carte électronique 16A qui, selon l'invention, vient remplacer la carte 16 de l'installation téléphonique précédemment décrite en référence à la figure 1.

Cette nouvelle carte 16A comporte un microprocesseur 17 qui, à l'instar de la carte 16 de la figure 1, est relié au commutateur 6 (non représenté) par la même ligne bifilaire 15.

Ce microprocesseur 17 comporte une entrée d'initialisation 18 qui, schématiquement représenté, reçoit le signal de mise en attente téléphonique déclenché par le commutateur manuel 8.

Ce signal d'initialisation est transmis, via la connexion 19, à un comparateur analogique de tension 20 qui reçoit :

. sur sa première entrée de comparaison 21 une tension de référence Vr, et

. sur sa deuxième entrée de comparaison 22 le niveau audio en sortie 15 du microprocesseur 17, ce niveau audio étant celui de la musique de patience normalement émise par ce microprocesseur et étant appliqué par une ligne bifilaire 23 branchée en parallèle sur la ligne bifilaire 15.

Lorsque l'amplitude quasi-instantanée du signal audio reçu en 22 devient inférieure à la valeur de référence Vr, le comparateur 20 déclenche, via la connexion 24, un temporisateur analogique 25 qui, si le signal instantané reçu par 24 ne subsiste pas pendant un intervalle de temps prédéterminé (par exemple de l'ordre de 30 secondes), réinitialise le comparateur 20 via une liaison 26. Si, au contraire, le signal en 24 subsiste pendant un laps de temps égal ou supérieur à cette valeur prédéterminée, c'est que l'on est bien en présence d'une panne d'émission de la musique de patience, et un signal sort en 27 du temporisateur 25, ce dernier signal étant appliqué à une bascule bistable 28 pour en faire basculer le niveau en sortie 29, ce niveau passant par exemple de l'état 0 (correspondant par exemple à 0 volt) à l'état 1 (correspondant par exemple à la valeur de la tension d'alimentation de la carte 16A).

Ce signal en 29, qui constitue le signal d'alarme, est appliqué, via une liaison 31, à une entrée 30 du microprocesseur 17.

En réponse à cette information 30 de non-fonctionnement de la musique de patience, le microprocesseur 17 vient commuter la sortie 15 sur un dispositif, compris dans la carte 17, de génération d'une tonalité de mise en garde, ou tonalité d'attente, cette commutation n'étant préférentiellement active qu'à la communication téléphonique suivante, ce qui simplifie grandement le logiciel de mise en oeuvre.

Comme il va de soi, l'invention n'est pas limitée à l'exemple de réalisation qui vient d'être décrit, qui n'est qu'une réalisation de principe, mais elle est bien au contraire susceptible d'être réalisée sous d'autres formes équivalentes, et éventuellement plus sophistiquées au détriment probable du prix de revient.

## Revendications

1 - Dispositif électronique de sécurité pour installation téléphonique (3) comportant une possibilité de mise en attente téléphonique du correspondant (1) avec émission d'un signal ou "musique de patience", caractérisé en ce qu'il comporte des moyens (23, 20) pour mesurer, lorsque la musique de patience doit être émise, l'amplitude quasi-instantanée de la tension qui correspond au signal audio de cette musique de patience, des moyens (20, 21, 22) pour comparer cette amplitude quasi-instantanée à une valeur de référence (Vr), et des moyens (25) pour faire basculer, lorsque cette amplitude reste inférieure à cette valeur de référence (Vr) pendant un intervalle de temps prédéterminé, un commutateur (28) apte à commander le remplacement de la musique de patience défaillante par un autre signal d'attente, telle qu'une tonalité.

2 - Dispositif selon la revendication 1, caractérisé en ce que ces derniers moyens sont prévus pour commander ce remplacement dès la prochaine communication téléphonique, et non pas pendant celle en cours.

3 - Dispositif selon la revendication 1 ou la revendication 2, caractérisé en ce qu'il comporte, en remplacement de la carte de musique de patience (16) équipant normalement ladite installation (3), une autre carte électronique (16A) comprenant une entrée d'initialisation (18) et comportant un microprocesseur (17), un comparateur de tensions (20), un temporisateur (25), et un commutateur (28).

Fig.1

Fig.2

Office européen
des brevets

# RAPPORT DE RECHERCHE EUROPEENNE

Numero de la demande

EP 90 11 4570

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | PATENT ABSTRACTS OF JAPAN, vol. 9, no. 318 (E-366)[2041], 13 décembre 1985; & JP-A-60 149 298 (MATSUSHITA) * En entier * --- | 1 | H 04 M 3/58<br>H 04 M 1/00 |
| Y | EP-A-0 312 828 (SIEMENS) * Résumé * --- | 1 | |
| A | GB-A-1 067 210 (ALFRED LEVY) * En entier * ----- | 1 | |

DOMAINES TECHNIQUES
RECHERCHES (Int. Cl.5)

H 04 M

Le présent rapport a été établi pour toutes les revendications

| Lieu de la recherche | Date d'achèvement de la recherche | Examinateur |
|---|---|---|
| LA HAYE | 09-10-1990 | VANDEVENNE M.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P0402)